# EUROPÄISCHE PATENTANMELDUNG

(11) **EP 2 136 463 A2**
(43) Veröffentlichungstag der Anmeldung: **23.12.2009**
(21) Anmeldenummer: 09006443.7
(22) Anmeldetag: 13.05.2009
(51) Int. Cl.: H02M 3/335, H02M 1/42

(54) **AC-DC-Zwischenkreis-Wandler mit sehr weitem AC-Eingangsspannungs-Bereich**

(30) Priorität: 18.06.2008 DE 102008028952
(71) Anmelder: ABB AG, 68309 Mannheim (DE)
(72) Erfinder: Coccia, Antonio, 5405 Baden (CH); Canales, Francisco, 5405 Baden (CH)
(74) Vertreter: Partner, Lothar

(57) **Zusammenfassung**

Es wird ein AC-DC-Zwischenkreis-Wandler mit sehr weitem AC-Eingangsspannungs-Bereich mit einem ZVS-Drei-Pegel-DC-DC-Resonanz-Umrichter mit LLC-Serienresonanz-Schwingkreis vorgeschlagen,
- wobei zwischen den DC-Zwischenkreisanschlüssen (3, 4) zwei Zwischenkreiskondensatoren (C_{Z1}, C_{Z2}) in Serie geschaltet sind, deren gemeinsamer Verbindungspunkt einen DC-Zwischenkreis-Mittenanschluss (5) bildet,
- wobei die DC-Zwischenkreisanschlüsse (3, 4) mit den Gleichanschlüssen eines Gleichrichters (D₁, D₂, D₃, D₄) verbunden sind, dessen AC-Eingangsanschlüsse (1, 2) mit der AC-Eingangsspannung beaufschlagt sind,
- wobei ein Bereichsumschalter (Sᵣ) zwischen einem AC-Eingangsanschluss (2) und dem DC-Zwischenkreis-Mittenanschluss (5) angeordnet ist,
- wobei der Bereichsumschalter (Sᵣ) in einem unteren AC-Eingangsspannung-Bereich geschlossen ist und der ZVS-Drei-Pegel-DC-DC-Resonanz-Umrichter gemäß einer Modulations-Strategie "Zwei-Pegel-Betriebsweise" betrieben wird, so dass der LLC-Serienresonanz-Schwingkreis mit der vollen zwischen den DC-Zwischenkreisanschlüssen (3, 4) anstehenden DC-Eingangsspannung beaufschlagt wird,
- wobei der Bereichsumschalter (Sᵣ) in einem mittleren AC-Eingangsspannung-Bereich geöffnet ist und der ZVS-Drei-Pegel-DC-DC-Resonanz-Umrichter ebenfalls gemäß der Modulations-Strategie "Zwei-Pegel-Betriebsweise" betrieben wird,
- wobei der Bereichsumschalter (Sᵣ) in einem oberen AC-Eingangsspannung-Bereich geöffnet ist und der ZVS-Drei-Pegel-DC-DC-Resonanz-Umrichter gemäß einer Modulations-Strategie "Drei-Pegel-Betriebsweise" betrieben so wird, dass der LLC-Serienresonanz-Schwingkreis lediglich mit der halben zwischen den DC-Zwischenkreisanschlüssen (3, 4) anstehenden DC-Eingangsspannung beaufschlagt wird.

## Beschreibung

Die Erfindung betrifft einen AC-DC-Zwischenkreis-Wandler mit sehr weitem AC-Eingangsspannungs-Bereich.

Aus der US 6 344 979 B1 ist ein LLC-Serienresonanz-Schwingkreis-DC-DC-Umrichter bekannt, wobei eingangsseitig Vollbrücken-Wechselrichter und alternativ hierzu zwei in Serie geschaltete Halbbrücken für die Beaufschlagung der Primärseite eines Transformators vorgeschlagen werden. Die auf der Sekundärseite des Transformators erzeugte Spannung wird nach Gleichrichtung einer Last zugeführt. Allgemein weist ein LLC-Serienresonanz-Schwingkreis dabei einen Resonanzkondensator mit in Serie geschalteter, beispielsweise durch die Streuinduktivität eines Transformators gebildeter Resonanzinduktivität sowie eine zur Primärwicklung des Transformators parallele Induktivität auf, wobei letzter beispielsweise durch eine Magnetisierungsinduktivität gebildet wird.

Der Erfindung liegt die Aufgabe zugrunde, einen energieoptimiert zu betreibenden, auf einem derartigen LLC-Serienresonanz-Schwingkreis-DC-DC-Umrichter basierenden AC-DC-Zwischenkreis-Wandler mit sehr weitem AC-Eingangsspannungs-Bereich anzugeben.

Diese Aufgabe wird erfindungsgemäß gelöst durch einen AC-DC-Zwischenkreis-Wandler mit sehr weitem AC-Eingangsspannungs-Bereich mit einem ZVS-Drei-Pegel-DC-DC-Resonanz-Umrichter, welcher vier in Serie zwischen zwei DC-Zwischenkreisanschlüssen angeordnete Primärschalter - ein erster und ein zweiter äußerer Primärschalter sowie ein erster und ein zweiter innerer Primärschalter - aufweist,
a) wobei der gemeinsame Verbindungspunkt zwischen den beiden inneren Primärschaltern über einen LLC-Serienresonanz-Schwingkreis mit einer Resonanzinduktivität, einer der Primärwicklung eines Transformators parallel liegenden Magnetisierungsinduktivität und einem Resonanzkondensator mit dem gemeinsamen Verbindungspunkt zwischen dem zweiten äußeren Primärschalter und dem zweiten DC-Zwischenkreisanschluss verbunden ist,
b) wobei der gemeinsame Verbindungspunkt zwischen erstem äußeren und inneren Primärschalter über einen Eingangskondensator mit dem gemeinsamen Verbindungspunkt zwischen zweitem inneren und äußeren Primärschalter verbunden ist,
c) wobei zwischen den beiden DC-Zwischenkreisanschlüssen zwei Zwischenkreiskondensatoren in Serie geschaltet sind, deren gemeinsamer Verbindungspunkt einen DC-Zwischenkreis-Mittenanschluss bildet,
d) wobei die DC-Zwischenkreisanschlüsse mit den Gleichanschlüssen eines Gleichrichters verbunden sind, dessen AC-Eingangsanschlüsse mit der AC-Eingangsspannung beaufschlagt sind,
e) wobei ein Bereichsumschalter zwischen einem AC-Eingangsanschluss und dem DC-Zwischenkreis-Mittenanschluss angeordnet ist,
f) wobei der Bereichsumschalter in einem unteren AC-Eingangsspannung-Bereich geschlossen ist und der ZVS-Drei-Pegel-DC-DC-Resonanz-Umrichter gemäß einer Modulations-Strategie "Zwei-Pegel-Betriebsweise" betrieben wird, bei welcher jeweils einerseits der erste äußere Primärschalter und der erste innere Primärschalter gemeinsam und andererseits der zweite innere Primärschalter und der zweite äußere Primärschalter gemeinsam angesteuert werden, so dass der LLC-Serienresonanz-Schwingkreis jeweils mit der vollen zwischen den DC-Zwischenkreisanschlüssen anstehenden DC-Eingangsspannung beaufschlagt wird,
g) wobei der Bereichsumschalter in einem mittleren AC-Eingangsspannung-Bereich geöffnet ist und der ZVS-Drei-Pegel-DC-DC-Resonanz-Umrichter ebenfalls gemäß der Modulations-Strategie "Zwei-Pegel-Betriebsweise" betrieben wird,
h) wobei der Bereichsumschalter in einem oberen AC-Eingangsspannung-Bereich geöffnet ist und der ZVS-Drei-Pegel-DC-DC-Resonanz-Umrichter gemäß einer Modulations-Strategie "Drei-Pegel-Betriebsweise" betrieben wird, bei welcher der erste äußere Primärschalter und der zweite innere Primärschalter einerseits sowie der erste innere Primärschalter und der zweite äußere Primärschalter andererseits in einer komplementären Art und Weise betrieben werden, so dass der LLC-Serienresonanz-Schwingkreis lediglich mit der halben zwischen den DC-Zwischenkreisanschlüssen anstehenden DC-Eingangsspannung beaufschlagt wird.

Die mit der Erfindung erzielbaren Vorteile bestehen insbesondere darin, dass die Leistungsfähigkeit und dabei insbesondere die Effizienz des Gesamtsystems trotz des sehr weiten AC-Eingangsspannungs-Bereiches nicht geschmälert werden. Der Transformator muss nicht für einen großen Eingangsspannungsbereich ausgelegt werden, sondern lediglich für einen im Vergleich zum weiten AC-Eingangsspannungs-Bereich stark reduzierten Bereich, was die optimale Auslegung des Transformators und hier insbesondere des erforderlichen Kerns wesentlich erleichtert. Die Streuinduktivität des Transformators und seine Magnetisierungsinduktivität verkörpern Bauelement-Anteile des LLC-Schwingkreises. Die Kombination der eingangsseitigen Drei-Pegel-Struktur mit den beiden unterschiedlichen Modulations-Strategien und dem LLC-Schwingkreis stellt trotz des sehr weitem AC-Eingangsspannungs-Bereichs und trotz großer Last-Variationen eine hohe Leistungsdichte und Effizienz des AC-DC-Zwischenkreis-Wandiers sicher.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert.

Es zeigen:
- Fig. 1: allgemein den Schaltungsaufbau eines ZVS-Drei-Pegel-DC-DC-Resonanz-Umrichters,
- Fig. 2: Zeitverläufe von wesentlichen Größen bei einer zweiten Betriebs-weise des ZVS-Drei-Pegel-DC-DC-Resonanz-Umrichters, nachstehend auch als Modulations-Strategie "Zwei-Pegel-Betriebs-weise" bezeichnet,
- Fig. 3a - 3c: äquivalente Schaltkreise zur Erläuterung der Modulations-Strategie "Zwei-Pegel-Betriebsweise" gemäß Fig. 2,
- Fig. 4: Zeitverläufe von wesentlichen Größen bei einer Modulations-Strategie "Drei-Pegel-Betriebsweise" des ZVS-Drei-Pegel-DC-DC-Resonanz-Umrichters,
- Fig. 5, 6: eingangsseitige Gleichrichter mit einem Bereichsumschalter zur Ermöglichung einer Spannungsverdopplung,
- Fig. 7: einen AC-DC-Zwischenkreis-Wandler mit passiver Oberwellen (Klirrfaktor) -Verminderung,
- Fig. 8-12: verschiedene eingangsseitige Booster-Gleichrichter mit der Möglichkeit einer aktiven Leistungsfaktor-Regelung,
- Fig. 13: einen AC-DC-Zwischenkreis-Wandler mit einem Dual-DC-Zwischenkreis und einer aktiver Leistungsfaktor-Regelung.

Für AC-DC-Zwischenkreis-Wandler mit einem sehr weiten AC-Eingangsspannungs-Bereich können zwei in Kaskade geschaltete Umrichter verwendet werden, um die Optimierung der passiven Bauelemente und die Herabsetzung der Spannungs- und Strombeanspruchung in den Halbleitern zu ermöglichen. Dabei wird die erste Stufe (Gleichrichter) verwendet, den Leistungsfaktor und den Klirrfaktor (Oberwellen-Belastung) des Umrichters zu verbessern. Des Weiteren dient diese erste Stufe zur Anpassung an die konkret vorliegende, an AC-Eingangsanschlüsse anzuschließende AC-Eingangsspannung. Im Ergebnis führt dies zu einer Konfiguration mit im Wesentlichen konstanter Zwischenkreisspannung, was verbesserte Optimierungsmöglichkeiten hinsichtlich der zweiten Stufe (DC-DC-Umrichter) bietet. Bei der ersten Stufe kann eine mittels eines Bereichsumschalters implementierte Spannungsverdopplungs-Konfiguration eingesetzt werden, um negative Auswirkungen eines sehr weiten AC-Eingangsspannungs-Bereichs auf die Leistungsdichte und Auslegungsmöglichkeit des AC-DC-Zwischenkreis-Wandiers zu vermindern. Bei sehr großen Abweichungen der AC-Eingangsspannung ist die Leistungsfähigkeit der ersten Stufe jedoch nach wie vor stark beeinträchtigt.

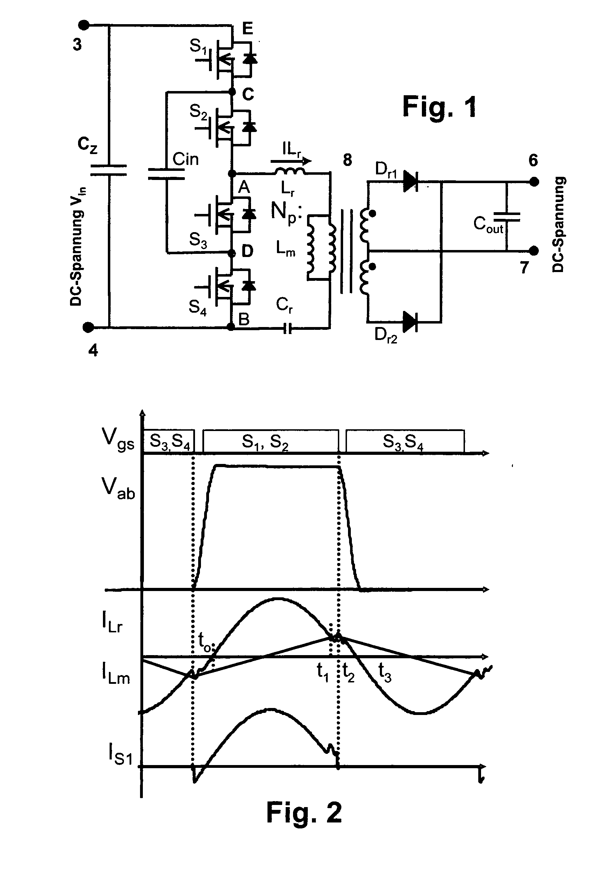

Fig. 1 zeigt den Schaltungsaufbau eines vorgeschlagenen ZVS-Drei-Pegel-DC-DC-Resonanz-Umrichters. Es bedeuten:
- 3, 4: DC-Zwischenkreisanschlüsse
- 6, 7: DC-Ausgangsanschlüsse
- 8: Transformator
- A: Schaltungspunkt beim DC-DC-Umrichter = Mittenanschluss der Primärschalter-Serienschaltung = Verbindungspunkt der Primärschalter S₂, S₃
- B: Schaltungspunkt beim DC-DC-Umrichter = Verbindungspunkt des Primärschalters S₄ mit dem DC-Zwischenkreisanschluss 4
- C: Verbindungspunkt der Primärschalter S₁, S₂
- D: Verbindungspunkt der Primärschalter S₃, S₄
- E: Verbindungspunkt des Primärschalters S₁ mit DC-Zwischenkreisanschluss 3
- Cᵢₙ: Eingangskondensator des DC-DC-Umrichters
- Cₒᵤₜ: Ausgangskondensator des DC-DC-Umrichters
- Cᵣ: Resonanzkondensator des DC-DC-Umrichters
- C_{Z}: Zwischenkreiskondensator
- Dᵣ₁, Dᵣ₂: Sekundärdioden des DC-DC-Umrichters
- I_{Lr}: Strom durch die Resonanzinduktivität
- Lₘ: Magnetisierungsinduktivität des Transformators des DC-DC-Umrichters
- Lᵣ: Resonanzinduktivität des DC-DC-Umrichters
- S₁, S₂, S₃, S₄: Primärschalter des DC-DC-Umrichters inklusive antiparallele Dioden (Rückspeisedioden), wobei im Einzelnen
- S₁: erster äußerer Primärschalter,
- S₂: erster innerer Primärschalter
- S₃,: zweiter innerer Primärschalter
- S₄: zweiter äußerer Primärschalter

Nachstehend wird die Betriebsweise dieses ZVS-Drei-Pegel-DC-DC-Resonanz-Umrichters mit sehr weitem AC-Eingangsspannungs-Bereich erläutert, wobei ZVS allgemein die Abkürzung für "Zero-Voltage-Switch" bzw. "Nullspannungsschalter" ist, womit ausgedrückt wird, dass die Leistungshalbleiter bei einer Spannung von Null Volt schalten.

Wie zu erkennen ist, benutzt der vorgeschlagene DC-DC-Umrichter auf der Primärseite eine auf Kondensatoren Cᵢₙ, C_{Z} gestützte Drei-Pegel-Struktur. Dies ermöglicht eine Herabsetzung der Spannungsbeanspruchung der in Serie zwischen den DC-Zwischenkreisanschlüssen 3, 4 (beaufschlagt mit DC-Spannung Vᵢₙ) liegenden Primärschalter S₁, S₂, S₃, S₄. Der auf der Primärseite vorgesehene LLC-Serien-resonanz-Schwingkreis, gebildet aus der am Schaltungspunkt A (= Verbindungspunkt von S₂ und S₃) liegenden Resonanzinduktivität Lᵣ, der Magnetisierungsinduktivität Lₘ des Transformators 8 und dem am Schaltungspunkt B (= DC-Zwischenkreisanschluss 4) liegenden Resonanzkondensator Cᵣ, ermöglicht das Nullspannungsschalten der Primärschalter S₁, S₂, S₃, S₄. Im Unterschied zu einem konventionellen Serienresonanz-Umrichter kann der vorgeschlagene ZVS-Drei-Pegel-DC-DC-Resonanz-Umrichter vorteilhaft bei Frequenzen oberhalb oder unterhalb der durch die Resonanzinduktivität Lᵣ und den Resonanzkondensator Cᵣ bestimmten Resonanzfrequenz arbeiten und dabei dennoch das Nullspannungsschalten der Primärschalter S₁, S₂, S₃, S₄ sicherstellen. Das Nullspannungsschalten wird durch Nutzung der Magnetisierungsinduktivität Lₘ des Transformators 8 erreicht.

Die parallel zur Primärwicklung des Transformators 8 liegende Magnetisierungsinduktivität Lₘ ermöglicht des Weiteren ein sanftes Schalten des vorgeschlagenen ZVS-Drei-Pegel-DC-DC-Resonanz-Umrichters in einem weiten Lastbereich, ohne dass es dabei erforderlich wäre, entweder den Gütefaktor des LLC-Serienresonanz-Schwingkreises oder das Verhältnis zwischen Schaltfrequenz und Resonanzfrequenz zu erhöhen. Infolgedessen wird auch die innerhalb des ZVS-Drei-Pegel-DC-DC-Resonanz-Umrichters umlaufende Energie herabgesetzt. Des Weiteren wird der Resonanzkondensator Cᵣ dazu verwendet, aufgrund des vorgeschlagenen Modulationsverfahrens erzeugte DC-Komponenten zu sperren. Auf diese Weise wird ein Gleichgewichtszustand des magnetischen Flusses des Transformators 8 gewährleistet. Die Sekundärseite des ZVS-Drei-Pegel-DC-DC-Resonanz-Umrichters kann mit Dioden-Gleichrichtern in Vollwellen-Konfiguration, Halbwellen-Konfiguration oder Spannungsverdopplungs-Konfiguration ausgerüstet sein. Im Ausführungsbeispiel ist die Sekundärwicklung des Transformators 8 geteilt, wobei die Teilwicklungen mit den Anoden von Sekundärdioden Dᵣ₁, Dᵣ₂ verbunden sind, deren Kathoden miteinander verbunden sind und den DC-Ausgangsanschluss 6 bilden. Der weitere DC-Ausgangsanschluss 7 liegt am gemeinsamen Anschluss beider Teilwicklungen. Zwischen beiden DC-Ausgangsanschlüssen 6, 7 ist ein Ausgangskondensator Cₒᵤₜ geschaltet.

Die Regelung dieses ZVS-Drei-Pegel-DC-DC-Resonanz-Umrichters erfolgt bei variablen Schaltfrequenzen. Der ZVS-Drei-Pegel-DC-DC-Resonanz-Umrichter hat die Möglichkeit, die Eingangsspannung zu erhöhen, wenn er unterhalb der Resonanzfrequenz betrieben wird. Um die Ausgangsspannung bei Herabsetzung der Eingangsspannung zu regeln, wird die Schaltfrequenz herabgesetzt.

Wie nachfolgend noch erläutert wird, ist der ZVS-Drei-Pegel-DC-DC-Resonanz-Umrichter in einer derartigen Weise ausgebildet, dass die Sekundärdioden Dᵣ₁, Dᵣ₂ unter der Bedingung eines Nullstromschaltens betrieben werden. Vorteilhaft wird hierdurch das Problem bezüglich Sperrverzögerungszeiten herabgesetzt.

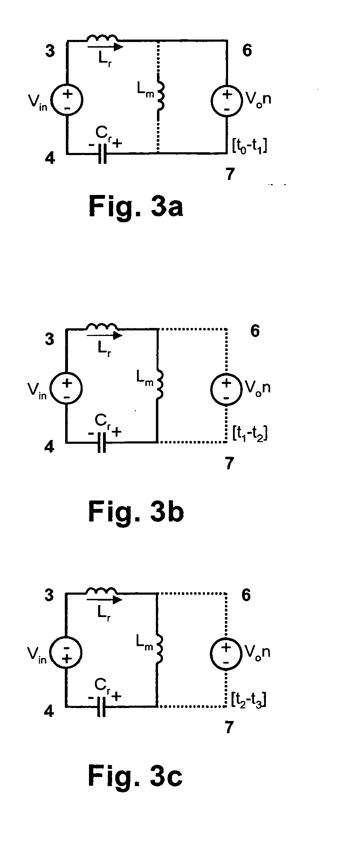

In Abhängigkeit der Betriebsbedingungen hat der vorgeschlagene ZVS-Drei-Pegel-DC-DC-Resonanz-Umrichter zwei verschiedene Betriebsweisen. Jede Betriebsweise weist während jeder Hälfte des Schaltzyklus drei Stufen auf.
- Die erste Betriebsweise tritt auf, wenn der ZVS-Drei-Pegel-DC-DC-Resonanz-Umrichter mit einer Schaltfrequenz betrieben wird, die höher als die durch die Resonanzinduktivität Lᵣ und den Resonanzkondensator Cᵣ bestimmte Resonanzfrequenz ist. In diesem Fall wird die natürliche Resonanzperiode des LLC-Serienresonanz-Schwingkreises unterbrochen respektive abgebrochen. Diese Betriebsweise ist ähnlich der Betriebsweise eines Serien-Resonanz-Umrichters.
- Die zweite Betriebsweise tritt auf, wenn der ZVS-Drei-Pegel-DC-DC-Resonanz-Umrichter mit einer Schaltfrequenz betrieben wird, die niedriger als die durch die Resonanzinduktivität Lᵣ und den Resonanzkondensator Cᵣ bestimmte Resonanzfrequenz ist. Diese Betriebsweise wird nachstehend unter Fig. 2 sowie Fig. 3a - 3c näher erläutert, da diese Betriebsweise mehrere Vorteile aufweist, wie die Herabsetzung von Abschaltverlusten bei den Primärschaltern S₁, S₂, S₃, S₄ und die Verringerung des Problems bezüglich Sperrverzögerungszeiten bei den Sekundärdioden Dᵣ₁, Dᵣ₂.

Beide Betriebsweisen (nicht resonante Betriebsweise einerseits und resonante Betriebsweise andererseits) stellen ein sanftes Schalten sicher und sind einfach beim ZVS-Drei-Pegel-DC-DC-Resonanz-Umrichter implementierbar.

Nachfolgend wird die zweite Betriebsweise des ZVS-Drei-Pegel-DC-DC-Resonanz-Umrichters an Hand von Fig. 2 sowie den Fig. 3a, 3b, 3c näher erläutert. Diese Figuren zeigen den Zeitverlauf interessierender Größen, wie
- V_{gs}: Ansteuersignale für die Primärschalter des DC-DC-Umrichters
- V_{ab}: Spannung zwischen den Schaltungspunkten A und B
- Vᵢₙ: Eingangsspannung des DC-DC-Umrichters
- V₀n: transformierte Ausgangsspannung des DC-DC-Umrichters
- I_{Lr}: Strom durch die Resonanzinduktivität
- I_{Lm}: Strom durch die Magnetisierungsinduktivität
- I_{S1}, I_{S3}: Strom durch den Primärschalter
- n: Übersetzungsverhältnis des Transformators des DC-DC-Umrichters
- t₀, t₁, t₂, t₃: Zeitpunkte zur Definition von Zeitspannen

In den Fig. 3a, 3b, 3c sind die für die zweite Betriebsweise äquivalenten Schaltkreise für die die während jeder Hälfte des Schaltzyklus auftretenden drei Stufen gezeigt.

Fig. 3a zeigt die erste Stufe der zweiten Betriebsweise, d. h. die Zeitspanne zwischen den Zeitpunkten t₀ und t₁. Zu Beginn dieser Zeitspanne sind der erste äußere Primärschalter S₁ und der erste innere Primärschalter S₂ eingeschaltet und der Strom durch die Resonanzinduktivität Lᵣ fließt durch die antiparallelen Dioden dieser Primärschalter S₁ und S₂. Zum Zeitpunkt t₀ wechselt der Primärstrom seine Richtung und die Differenz zwischen der Hälfte der Eingangsspannung Vᵢₙ und der transformierten Ausgangsspannung Von liegt am LLC-Serienresonanz-Schwingkreis an, wobei n das Übersetzungsverhältnis des Transformators 8 ist. Deshalb beginnt eine Schwingung zwischen Resonanzkondensator Cᵣ und Resonanzinduktivität Lᵣ. Während dieser ersten Stufe wird die Eingangsleistung an den Ausgang übertragen.

Fig. 3b zeigt die zweite Stufe der zweiten Betriebsweise, d. h. die Zeitspanne zwischen den Zeitpunkten t₁ und t₂. Zum Zeitpunkt t₁ erreicht der Resonanzstrom durch die Resonanzinduktivität Lᵣ den Magnetisierungsstrom, wodurch die Sekundärseite des Transformators 8 von der Primärseite abgekoppelt wird. Zu diesem Zeitpunkt t₁ beginnt eine neue Schwingung zwischen Resonanzinduktivität Lᵣ, Magnetisierungsinduktivität Lₘ des Transformators 8 und Resonanzkondensator Cᵣ.

Fig. 3c zeigt die dritte Stufe der zweiten Betriebsweise, d. h. die Zeitspanne zwischen den Zeitpunkten t₂ und t₃. Zum Zeitpunkt t₂ werden die Primärschalter S₁ und S₂ mittels der Magnetisierungsinduktivität Lₘ abgeschaltet, was die Abschaltverluste reduziert. Des Weiteren entlädt die Magnetisierungsinduktivität Lₘ die parasitären Kapazitäten der Primärschalter S₃ und S₄ zu Null, um ihre antiparallelen Dioden einzuschalten, wodurch eine negative Spannung über den Transformator 8 angelegt wird. Da die antiparallelen Dioden der Primärschalter S₃ und S₄ den Primärstrom führen, können die Primärschalter S₃ und S₄ als Nullspannungsschalter betrieben werden. Während dieser dritten Stufe verbleibt die Sekundärseite von der Primärseite des DC-DC-Umrichters abgekoppelt. Des Weiteren wird die Schwingung zwischen Resonanzinduktivität Lᵣ, Magnetisierungsinduktivität Lₘ des Transformators 8 und Resonanzkondensator Cᵣ fortgeführt. Am Ende dieser dritten Stufe wechselt der Primärstrom seine Richtung, wodurch die nächste Hälfte des Schaltzyklus beginnt, bei welcher der zweite innere Primärschalter S₃ und der zweite äußere Primärschalter S₄ eingeschaltet sind. Zusammenfassend wird der ZVS-Drei-Pegel-DC-DC-Resonanz-Umrichter in einem unteren AC-Eingangsspannung-Bereich gemäß einer Modulations-Strategie "Zwei-Pegel-Betriebsweise" betrieben,
- bei welcher jeweils zunächst der erste äußere Primärschalter S₁ und der erste innere Primärschalter S₂ gemeinsam und
- anschließend der zweite innere Primärschalter S₃ und der zweite äußere Primärschalter S₄ gemeinsam angesteuert werden,
- so dass der LLC-Serienresonanz-Schwingkreis jeweils mit der vollen zwischen den DC-Zwischenkreisanschlüssen 3, 4 anstehenden DC-Eingangsspannung beaufschlagt wird.

Die vorstehend erläuterte resonante Betriebsweise des LLC-Serienresonanz-Schwingkreises stellt somit die ZVS-Betriebsweise mit reduzierten Abschaltverlusten für die Primärschalter S₁, S₂, S₃, S₄ und reduzierten Verlusten der Sekundärdioden Dᵣ₁, Dᵣ₂ sicher.

Wie eingangs bereits erwähnt, ist eine Optimierung des Gesamtsystems aufgrund des erwünschten sehr weiten AC-Eingangsspannungs-Bereiches des DC-DC-Zwischenkreis-Umrichters sehr problematisch. Bei einer Zwei-Stufen-Konfiguration mit (eingangsseitigem) Gleichrichter und (ausgangsseitigem) DC-DC-Umrichter wird üblicherweise die DC-Spannung des Zwischenkreises geregelt, was eine Optimierung der zweiten Stufe, d. h. des separaten DC-DC-Umrichters ermöglicht. Allerdings ist die erste Stufe (Gleichrichter) nach wie vor durch den gewünschten sehr weiten Variationsbereich der AC-Eingangsspannung problematisch. Um gewünschte Anforderungen bezüglich des Klirrfaktors (Oberwellen-Belastung) zu erreichen, wird die erste Stufe üblicherweise mittels eines Booster-Gleichrichters (Hochsetz-Stellers) realisiert, wobei die DC-Spannung des Zwischenkreises derart gewählt wird, dass sie höher als der maximale Scheitelwert der (netzseitigen) AC-Eingangsspannung ist. Deshalb muss bei der niedrigsten AC-Eingangsspannung der Verstärkungsfaktor des Gleichrichters erhöht werden, was den Effektivstrom in den Leistungshalbleitern heraufsetzt. Zusätzlich belastet die an der eingangsseitigen Induktivität Lᵢₙ anliegende Spannung die hinsichtlich der Stromwelligkeit bestehenden Anforderungen.

Die Lösung kann eine entsprechend der vorliegenden AC-Eingangsspannung variabel vorgegebene DC-Spannung des Zwischenkreises sein. Bei dieser Lösung wird die DC-Spannung des Zwischenkreises im unteren AC-Eingangsspannungs-Bereich entsprechend dem maximalen Scheitelwert der AC-Eingangsspannung dieses unteren Bereichs vorgegeben. Im mittleren AC-Eingangsspannungs-Bereich wird die DC-Spannung des Zwischenkreises vorgegeben, um die nun vorgegebenen Betriebsbedingungen zu erfüllen, welche eine Optimierung der ersten Stufe ermöglichen.

Um diese vorgegebenen Anforderungen zu erfüllen, ist hinsichtlich der zweiten Stufe ein DC-DC-Umrichter erforderlich, welcher fähig ist, an unterschiedlichen DC-Eingangsspannungen zu arbeiten. Eines mit sanft schaltenden DC-DC-Umrichtern verbundenes Problem ist ihr schlechtes Betriebsverhalten, wenn sie bei einem weiten DC-Eingansspannungs-Bereich arbeiten müssen. Bei einem solchen Anwendungsfall verursacht die Variation der DC-Eingangsspannung sowohl eine Herabsetzung des Transformator-Windungsverhältnisses als auch große Abweichungen bei der Schaltfrequenz oder beim Lastspiel. Aus diesen Gründen ist eine Optimierung des DC-DC-Umrichters schwierig zu erreichen, und zwar nicht nur als Folge der zunehmenden Belastungserhöhung bei den Leistungshalbleitern und der Erhöhung der innerhalb des DC-DC-Umrichters zirkulierenden Energie, sondern auch aufgrund eines herabgesetzten Wirkungsgrades.

Der Einsatz eines sich auf eine eingangsseitige Drei-Pegel-Struktur stützenden DC-DC-Umrichters erlaubt die Verwendung unterschiedlicher Modulations-Strategien (Modulations-Schemata), welche auf einer "Zwei-Pegel-Betriebsweise" oder einer "Drei-Pegel-Betriebsweise" oder einer "Gemischt-Zwei-Drei-Pegel-Betriebsweise" basieren. Indem man diese Charakteristik als Funktion und in Abhängigkeit der konkret vorliegenden DC-Eingangsspannung verwendet, ist es möglich, die aufgrund eines weiten DC-Eingangsspannungs-Bereiches bedingten Schwankungen der Leistungsfähigkeit des DC-DC-Umrichters zu minimieren. Auf diese Weise wird der DC-DC-Umrichter im unteren AC-Eingangsspannungs-Bereich mit der unter den Fig. 2,3a - 3c beschriebenen Modulationsstrategie "Zwei-Pegel-Betriebsweise" betrieben. Dabei werden der Transformator 8 und der LLC-Serienresonanz-Schwingkreis mit der vollen DC-Eingangsspannung beaufschlagt. Im oberen DC-Eingangsspannungs-Bereich - das bedeutet eine höhere DC-Spannung des Zwischenkreises bei einer Zwei-Stufen-Konfiguration (Gleichrichter + DC-DC-Umrichter) - wird die Modulationsweise derart geändert, dass der Transformator 8 und der LLC-Serienresonanz-Schwingkreis lediglich mit der halben (nun höheren) DC-Eingangsspannung beaufschlagt werden, nachfolgend mit Modulations-Strategie "Drei-Pegel-Betriebsweise" bezeichnet.

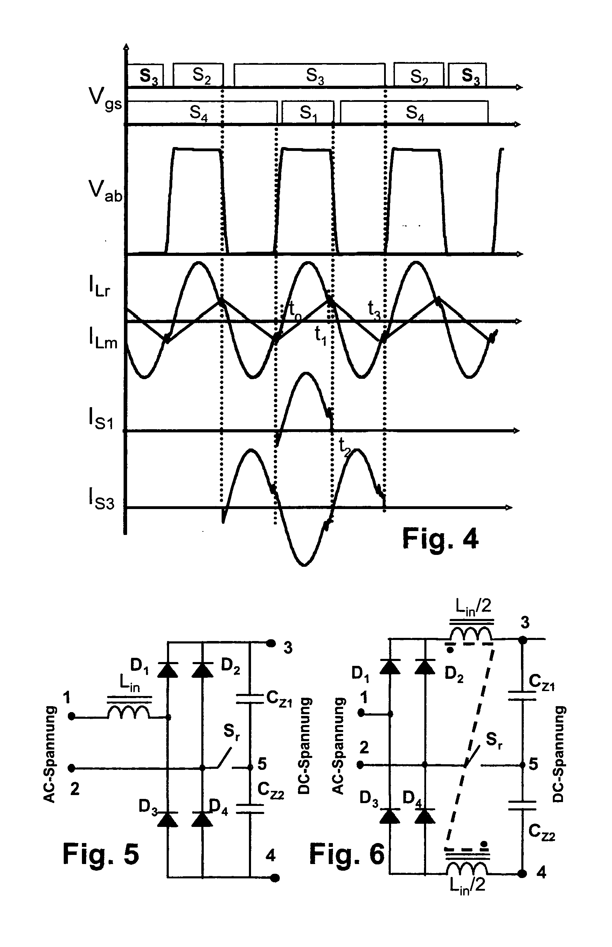

In Fig. 4 sind die Zeitverläufe der wesentlichen Größen bei dieser Modulations-Strategie gezeigt, welche eine "Drei-Pegel-Betriebsweise" im oberen DC-Eingangsspannungs-Bereich beinhaltet. Wie zu erkennen ist, werden der erste äußere Primärschalter S₁ und der zweite innere Primärschalter S₃ einerseits sowie der erste innere Primärschalter S₂ und der zweite äußere Primärschalter S₄ andererseits in einer komplementären Art und Weise betrieben. Obwohl das Lastspiel dieser Primärschalter eingestellt werden kann, um hierdurch die Ausgangsspannung zu regeln, wird das Lastspiel für den Primärschalter S₁ und entsprechend für den Primärschalter S₂ auf 25% desjenigen Lastspiels festgesetzt, bei welchem die maximale Spannungsverstärkung bei dieser Modulations-Strategie erzielt wird. Der ZVS-Drei-Pegel-DC-DC-Resonanz-Umrichter wird gemäß einer Modulations-Strategie "Drei-Pegel-Betriebsweise" derart betrieben, dass der LLC-Serienresonanz-Schwingkreis lediglich mit der halben zwischen den DC-Zwischenkreisanschlüssen 3, 4 anstehenden DC-Eingangsspannung beaufschlagt wird.

Fig. 4 zeigt des Weiteren, dass die vorgeschlagene Modulations-Strategie "Drei-Pegel-Betriebsweise" eine Frequenz am LLC-Serienresonanz-Schwingkreis und am Transformator 8 zur Folge hat, welche dem zweifachen Wert der Schaltfrequenz entspricht. Um die gleiche Verstärkungs-Charakteristik im LLC-Serienresonanz-Schwingkreis zu erzielen, wird die Schaltfrequenz der Primärschalter S₁, S₂, S₃, S₄ auf die Hälfte des im unteren Eingangsspannungs-Bereich auftretenden Schaltfrequenz-Wertes festgelegt.

Es ist noch zu erwähnen, dass sich bei beiden Betriebsweisen respektive Modulations-Strategien "Zwei-Pegel-Betriebsweise" gemäß Fig. 2, 3a - 3b (verwendet bei "kleiner" DC-Eingangsspannung) einerseits und "Drei-Pegel-Betriebsweise" gemäß Fig. 4 (verwendet bei "großer" DC-Eingangsspannung) andererseits gleiche Kurvenverläufe ergeben, was ähnliche Effektiv- und Scheitelwerte der Ströme für die Leistungshalbleiter, den LLC-Serienresonanz-Schwingkreis und den Transformator 8 zur Folge hat. Zusätzlich sind auch die Schaltverluste bei beiden Betriebsweisen gleich.

Dies gewährleistet eine durchgehend gute Optimierungsmöglichkeit bei beiden Betriebsweisen.

Nachfolgend wird die erste Stufe der Zwei-Stufen-Konfiguration respektive des AC-DC-Zwischenkreis-Wandlers, der Gleichrichter, näher betrachtet. Die übliche Eingangsstufe beinhaltet einen Vollbrücken-Gleichrichter mit einem nachgeschaltetem großen Glättungs-Kondensator. Dieser Glättungs-Kondensator reduziert die Welligkeit der Spannungs-Kurvenform bei der zweiten Stufe, dem DC-DC-Umrichter. Ein Problem dieses Eingangsstromes ist es jedoch, dass er außerordentliche Spitzen-Eingangsströme und nichtlineare Verzerrungen im Netz verursacht. Der Klirrfaktor (Oberwellen-Belastung) bei dieser Art der Gleichrichtung liegt gewöhnlich im Bereich 55% bis 65%. Der hieraus resultierende Leistungsfaktor weist einen ähnlich schlechten Wert auf.

Durch Modifikation der Eingangsstufe (Gleichrichter) können Verbesserungen hinsichtlich des Leistungsfaktors und der nichtlinearen Verzerrungen erzielt werden. Passive Lösungen zur Verminderung von Oberwellen, wie in den Fig. 5 und 6 gezeigt, können bei Anwendungen im Niedrig-Energie-Bereich eingesetzt werden, um die angestrebten Verbesserungen zu erreichen. Mit einer großen Glättungsinduktivität Lᵢₙ erzeugt der Einphasen-Vollbrücken-Gleichrichter mit den Dioden D₁, D₂, D₃, D₄ einen Rechteckstrom bei einem Leistungsfaktor von 90% und einem Klirrfaktor (Oberwellen-Belastung) von 48%. Diese erreichbaren Werte verschlechtern sich, wenn sich der Wert der Glättungsinduktivität Lᵢₙ verringert. Zumindest im Niedrig-Energie-Bereich respektive kleiner angeschlossener Last werden die zu fordernden Werte für den Klirrfaktor respektive die Oberwellen-Belastung erreicht.

In den Fig. 5 und 6 sind zwei Gleichrichter gezeigt, welche durch den Einsatz eines Bereichsumschalters S_{R} die Option einer Spannungsverdopplung ermöglichen. Ein Unterschied zwischen den Schaltungsanordnungen gemäß Fig. 5 und Fig. 6 ist dabei die Anordnung der Glättungsinduktivität Eᵢₙ. Bei der Schaltungsanordnung gemäß Fig. 5 ist die Glättungsinduktivität Lᵢₙ auf der AC-Seite angeordnet. Bei der Schaltungsanordnung gemäß Fig. 6 ist die Glättungsinduktivität Lᵢₙ auf der DC-Seite angeordnet und dabei in zwei miteinander gekoppelte Komponenten Lᵢₙ/2 aufgeteilt, was zu einer Reduzierung von Größe und Gewicht dieses passiven Bauelements führt. Es bedeuten:
- D₁, D₂, D₃, D₄: Dioden des Gleichrichters
- C_{Z1}, C_{Z2}: Zwischenkreiskondensator
- Lᵢₙ: Glättungsinduktivität.des Gleichrichters
- S_{R}: Bereichsumschalter des Gleichrichters
- 1, 2: AC-Eingangsanschlüsse
- 5: DC-Zwischenkreis-Mittenanschluss

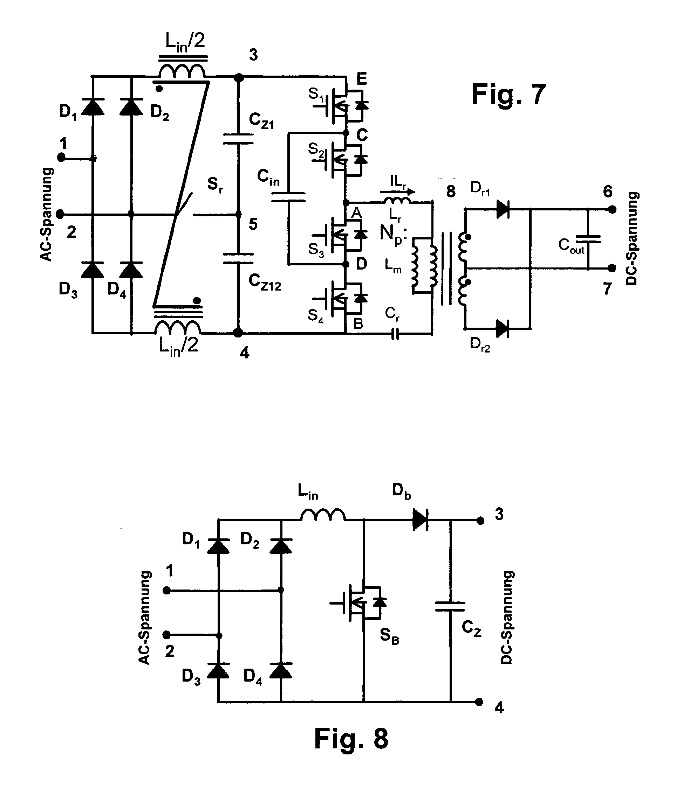

In Fig. 7 ist als Ergebnis der vorstehenden Erläuterungen ein Vorschlag für einen AC-DC-Zwischenkreis-Wandler (mit Zwei-Stufen-Konfiguration) mit passiver Oberwellen (Klirrfaktor) -Verminderung dargerstellt. Der (Eingangs-) Gleichrichter ist in Form eines Dioden-Brücken-Gleichrichters mit den Dioden D₁, D₂, D₃, D₄ und mit geteilter passiver Glättungsinduktivität Lᵢₙ auf der DC-Seite zur Verminderung des Klirrfaktors (Oberwellen-Belastung) ausgeführt. In diesem Fall wird die DC-Spannung des Zwischenkreises nicht an einen vorgegebenen (gewünschten) Wert angepasst, was die Optimierung des nachgeschalteten DC-DC-Umrichters erschwert. Die Filter/Glättungs- und Halbleiter-Baukomponenten müssen für die Belastung mit dem höchstmöglichen Strom ausgelegt werden, welcher bei der niedrigsten Netzspannung auftritt. Der Vorschlag benutzt eine Anordnung mit Bereichsumschalter S_{R}, um derart die Belastungen in Folge von großen Abweichungen der DC-Eingangsspannung für den nachgeschalteten DC-DC-Umrichter zu reduzieren.

Diese Anordnung ist mit der vorstehend für den ZVS-Drei-Pegel-DC-DC-Resonanz-Umrichter erläuterten Anordnung respektive Modulations-Strategie mit "Zwei-Pegel-Betriebsweise" und "Drei-Pegel-Betriebsweise" kombiniert, um derart die bei sehr weitem AC-Eingangsspannungs-Bereich auftretenden Anforderungen zu erfüllen, wodurch ein universeller Betrieb an Netzspannungen sowohl im unteren AC-Eingangsspannungs-Bereich 90 - 135V als auch im oberen AC-Eingangsspannungs-Bereich 400 - 550V wie folgt möglich ist:
A) Im unteren AC-Eingangsspannungs-Bereich 90-135V ist der Bereichsumschalter S_{R} geschlossen und die Spannung am Kondensator des Zwischenkreises ist mit Werten von 254 bis 380V doppelt so hoch wie der Scheitelwert der AC-Eingangsspannung. Der ZVS-Drei-Pegel-DC-DC-Resonanz-Umrichter wird gemäß der vorstehend zu den Fig. 2, 3a - 3c erläuterten Modulations-Strategie "Zwei-Pegel-Betriebsweise" betrieben. Die Ausgangsspannung wird durch Frequenzmodulation unter Einsatz der Primärschalter S₁, S₂, S₃, S₄ geregelt.
B) Bei mittleren AC-Eingangsspannungen im Bereich 160 - 265V wird der Bereichsumschalter S_{R} geöffnet, was zu einer ungeregelten DC-Spannung im Bereich 235 - 380V führt. Der DC-DC-Umrichter wird wie unter A) betrieben, d. h. mit der Modulations-Strategie "Zwei-Pegel-Betriebsweise" wie unter den Fig. 2, 3a - 3c erläutert.
C) Bei höheren AC-Eingangsspannungen im Bereich 400 - 550V ist der Bereichsumschalter S_{R} ebenfalls geöffnet, was zu einer ungeregelten DC-Spannung im Bereich 565 - 780V führt. Diese Spannung entspricht näherungsweise dem doppelten Wert der üblichen Netzspannung. Um dies zu kompensieren, wird der ZVS-Drei-Pegel-DC-DC-Resonanz-Umrichter gemäß der vorstehend zu Fig. 4 erläuterten Modulations-Strategie "Drei-Pegel-Betriebsweise" betrieben. Die Ausgangsspannung wird ebenfalls durch Frequenzmodulation unter Einsatz der Primärschalter S₁, S₂, S₃, S₄ geregelt.

Es ist zu nachzutragen, dass Effektivwerte und Scheitelwerte der in den Leistungshalbleitern, in den LLC-Serienresonanz-Schwingkreis-Bauelementen sowie im Transformator 8 fließenden Ströme bei beiden Modulations-Strategien "Zwei-Pegel-Betriebsweise" und "Drei-Pegel-Betriebsweise" gleich sind. Des Weiteren sind auch die Schaltverluste in allen Fällen gleich. Ferner sind die für die Transformator-Ausgestaltung relevanten Parameter bei beiden Modulations-Strategien ähnlich. Im Ergebnis kann festgestellt werden, dass die gemäß Fig. 7 vorgeschlagene Lösung sowohl bei großem Bereich hinsichtlich der AC-Eingangsspannung - im Beispiel 90 bis 550V - als auch bei relativ hohem Wert der AC-Eingangsspannung - im Beispiel 550V - vorteilhaft einsetzbar ist, ohne dass dabei der Wirkungsgrad und die Leistungsdichte des AC-DC-Zwischenkreis-Wandlers nachteilig beeinflusst werden.

Nachfolgend werden auf der Zwei-Stufen-Konfiguration (Gleichrichter + DC-DC-Umrichter) basierende Lösungen für AC-DC-Zwischenkreis-Wandler mit der Fähigkeit aktiver Leistungsfaktor-Beeinflussung (Regelung) erläutert. Die Fig. 8-12 zeigen hierfür vereinfachte Schaltungsanordnungen von Booster-Gleichrichtern, welche für die erste Stufe der vorgeschlagenen Zwei-Stufen-Konfiguration eingesetzt werden können:
- Fig. 8 zeigt einen Ein-Schalter-Booster-Gleichrichter (Single-Switch-Boost-Converter) mit Dioden D₁, D₂, D₃, D₄ des Brückengleichrichters, DC-seitiger Glättungsinduktivität Lᵢₙ, einem Schalter S_{B}, Ausgangsdiode D_{b} und Zwischenkreiskondensator C_{Z},

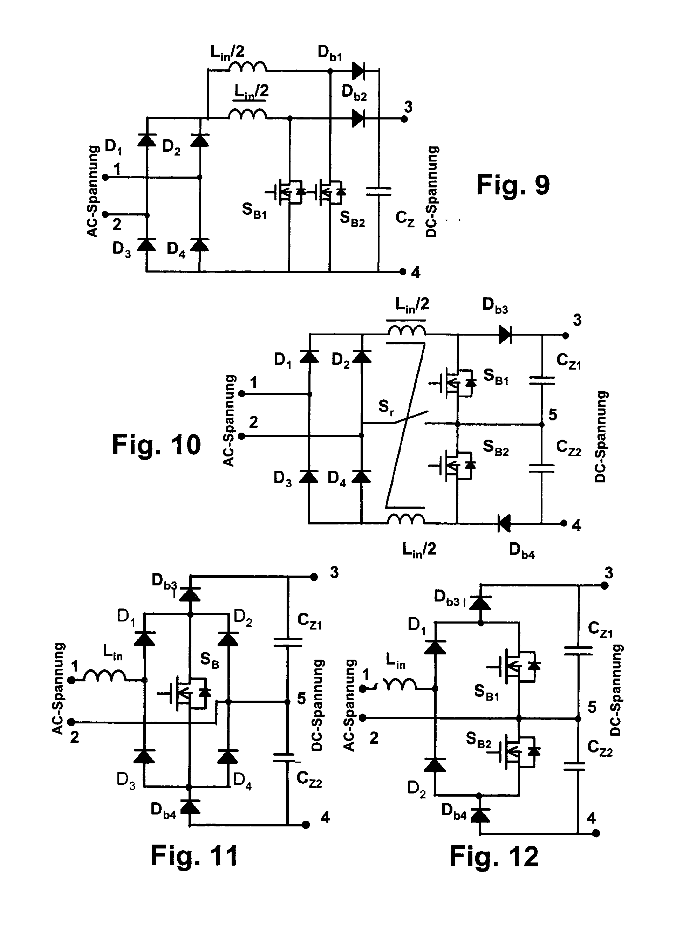

- Fig. 9 zeigt einen Booster-Gleichrichter mit Dioden D₁, D₂, D₃, D₄ des Brücken-gleichrichters, zwei ineinandergreifenden Schaltern S_{B1}, S_{B2} , zwei zugeordneten DC-seitigen, geteilten Glättungsinduktivitäten Lᵢₙ/2, sowie zwei Ausgangsdioden O_{b1} und D_{b2} und Zwischenkreiskondensator C_{Z} (interleaved-Boost-Converter),
- Fig. 10 zeigt einen Drei-Pegel-Booster-Gleichrichter mit Dioden D₁, D₂, D₃, D₄ des Brückengleichrichters, zwei am Ausgang des Brückengleichrichtern liegenden, geteilten und miteinander gekoppelten Glättungsinduktivitäten Lᵢₙ/2, zwei mit den DC-Zwischenkreisanschlüssen 3, 4 verbundenen Ausgangsdioden D_{b3} und D_{b4} , zwei mit den Glättungsinduktivitäten verbundenen, in Serie geschalteten Schaltern S_{B1}, S_{B2} , zwei in Serie zwischen den DC-Zwischenkreisanschlüssen 3, 4 geschalteten Zwischenkreiskondensatoren C_{Z1}, C_{Z2} und einem zwischen Brückengleichrichter und gemeinsamem Verbindungspunkt (= DC-Zwischenkreis-Mittenanschluss 5) der Schalter und Zwischenkreiskondensatoren angeordnetem Bereichsumschalter Sr,
- Fig. 11 zeigt einen Ein-Phasen-Vienna-Booster-Gleichrichter (Single-Phase-Vienna-Boost-Converter) mit Dioden D₁, D₂, D₃, D₄ des Brückengleichrichters, AC-seitiger Glättungsinduktivität Lᵢₙ, zwei mit den DC-Zwischenkreisanschlüssen 3, 4 verbundenen Ausgangsdioden D_{b3} und D_{b4} , zwei in Serie zwischen den DC-Zwischenkreisanschlüssen 3, 4 geschalteten Zwischenkreiskondensatoren C_{Z1}, C_{Z2} und einem zwischen den Gleichanschlüssen des Brücken-gleichrichters geschalteten Schalter S_{B} ,
- Fig. 12 zeigt einen Zwei-Schalter-Drei-Pegel-Booster-Gleichrichter (Two-Switch-Three-Level-Boost-Converter), bei welchem im Vergleich zur Schaltung gemäß Fig. 11 der Schalter S_{B} entfällt und die Dioden D2, D4 des Brücken-gleichrichters durch Schalter S_{B1}, S_{B2} ersetzt sind.

Dabei bedeuten:
- D_{b}, D_{b1}, D_{b2} , D_{b3}, D_{b4}: Ausgangsdioden des Gleichrichters
- S_{B}, Sei, S_{B2}: Schalter des Gleichrichters inklusive Rückspeisedioden

Bei allen Lösungen ist der Brücken-Gleichrichter durch eine aktive Leistungsfaktor-Regelung ergänzt, deren prinzipielle Funktionsweise den Eingangsstrom-Klirrfaktor (respektive die Oberwellen-Belastung) verbessert. Die Gleichrichter werden im CCM-Modus (Continuous Conduction Mode, ununterbrochene Stromführung) betrieben, wodurch eine verbesserte Regelung des Eingangsstromes erzielt wird. Zusätzlich reduziert der nicht pulsierende Eingangsstrom des Gleichrichters die an EMI-Filter (Filter zur Reduzierung elektromagnetischer Funktionsstörungen) zu stellenden Anforderungen.

In den Fig. 8 und 9 sind vereinfachte Konfigurationen eines üblichen Ein-Schalter-Booster-Gleichrichters (Fig. 8) sowie eines Booster-Gleichrichter mit zwei ineinandergreifenden Schaltern (Fig. 9) dargestellt. Der wesentliche Vorteil des Booster-Gleichrichters gem. Fig. 9 ist darin zu sehen, dass die äquivalente Betriebsfrequenz am Eingang des Gleichrichters heraufgesetzt wird, ohne dabei die Schaltverluste im Gleichrichter zu beeinträchtigen. Als Folge hiervon werden die EMI-Filter und die Gesamt-Induktivität herabgesetzt. Ein zusätzlicher Vorteil bei der Anordnung gemäß Fig. 9 ergibt sich, wenn die beiden Glättungsinduktivitäten unter Nutzung eines gemeinsamen Kerns miteinander gekoppelt sind. Die Lösungsvorschläge gemäß Fig. 8, 9 sind universell für unterschiedliche Netzspannungsbedingungen, z. B. im AC-Spannungsbereich 90V - 265V einsetzbar, wobei der Zwischenkreis bei einer DC-Spannung von 400V anzusetzen ist. In diesem Fall werden MOSFET oder IGBT für 500V oder 600V eingesetzt. Allerdings wird die Effizienz des Gleichrichters im unteren AC-Eingangsspannungs-Bereich beeinträchtigt, was gegebenenfalls eine Leistungsherabsetzung erfordert. Wie vorstehend bereits erwähnt kann die Effizient verbessert werden, indem ein Dual-DC-Zwischenkreis (mit Bereichsumschalter) in die Betriebsweise des AC-DC-Zwischenkreis-Wandlers implementiert wird. In diesem Fall kann mit Drei-Pegel-Gleichrichtern Rücksicht auf diese Bedingungen genommen werden, ohne dass dabei die Effizienz des Umrichters beeinträchtigt wird.

In den Fig. 10, 11, 12 sind Drei-Pegel-Gleichrichter für die Anwendung beim oberen AC-Eingangsspannungs-Bereich 400 - 550V dargestellt, bei denen die DC-Spannung des Zwischenkreises für einen verbesserten Betrieb bei 800V anzusetzen ist. Die Vorteile dieser Drei-Pegel-Gleichrichter gem. Fig. 10, 11, 12 gegenüber üblichen Ein-Schalter-Booster-Gleichrichtern sind die herabgesetzte Spannungsbeanspruchung bei den Hauptkomponenten (herabgesetzt auf die halbe DC-Spannung des Zwischenkreises) und die Unterdrückung der Stromwelligkeit, was die Baugröße der Glättungsinduktivität reduziert. Für niedrigere Spannung ausgelegte Leistungshalbleiter weisen vorteilhaft verbesserte elektrische Charakteristika auf, wie niedrigere Leitungsverluste und niedrigere Schaltverluste. Im Einschaltzustand sind die Schaltverluste reduziert, da für niedrigere Spannung ausgelegte Leistungshalbleiter niedrigere ausgangsseitige Kapazitäten aufweisen. Darüber hinaus wird der Leistungshalbleiter lediglich mit der halben DC-Spannung des Zwischenkreises belastet. Dies führt insgesamt zu niedrigeren Verlusten. Darüber hinaus weisen mit niedrigerer Spannung zu beaufschlagende Dioden eine bessere Charakteristik hinsichtlich Sperrverzögerungszeit auf.

Es ist von Wichtigkeit, dass diese Gleichrichter nicht nur zur Abdeckung des oberen AC-Eingangsspannungs-Bereiches von 400 - 550V, sondern für den gesamten AC-Eingangsspannungs-Bereich 90 - 550V geeignet sind. In diesem Fall wird die Effizienz des Umrichters sogar mehr im unteren AC-Eingangsspannungs-Bereich beeinträchtigt, da in diesem unteren Bereich die DC-Verstärkung des Umrichters belastet wird, um die geforderte DC-Spannung von 800V des Zwischenkreises zu erreichen. Der Einsatz eines Dual-DC-Zwischenkreises (mit Bereichsumschalter) verbessert die Effizienz im unteren AC-Eingangsspannungs-Bereich.

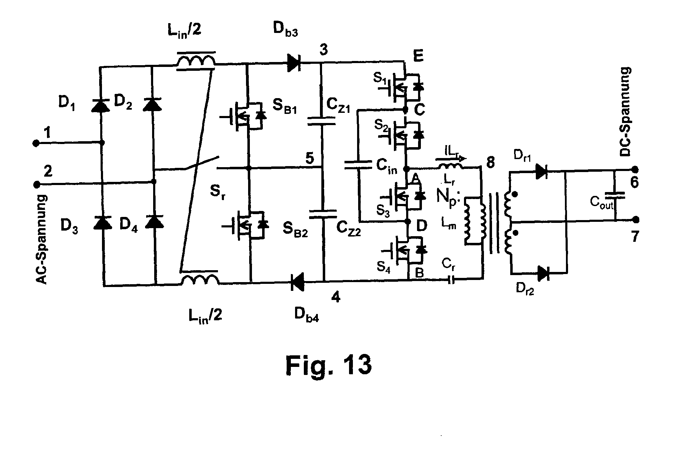

In Fig. 13 ist als Ergebnis der vorstehenden zusätzlichen Erläuterungen gemäß den Fig. 8 - 12 ein vereinfachtes Ausführungsbeispiel eines AC-DC-Zwischenkreis-Wandlers mit Dual-DC-Zwischenkreis dargestellt, welcher zur Abdeckung des weiten AC-Eingangsspannungs-Bereiches 90 - 550V sehr gut geeignet ist. Die erste Stufe wird mittels eines Drei-Pegel-(Booster-)Gleichrichters mit Bereichsumschalter Sᵣ (siehe Anordnung gemäß Fig. 10) implementiert. Die beiden Schalter S_{B1}, S_{B2} des Drei-Pegel-Booster-Gleichrichters werden mit einer Phasenverschiebung von 180° gegeneinander betrieben, um die Stromwelligkeit mittels der Glättungsinduktivität optimal zu unterdrücken. Zusätzlich sind die beiden geteilten Glättungsinduktivitäten Lᵢₙ/2 miteinander gekoppelt, um Abmessungen und Volumen dieser passiven Baukomponenten zu minimieren. Es wird ein Dual-DC-Zwischenkreis (Dual-Gleichrichter-Konzept) unter Einsatz des Bereichsumschalters S_{R} verwendet:
- Im unteren AC-Eingangsspannungs-Bereich 90-135V ist der Bereichsumschalter S_{R} geschlossen, wodurch eine Spannungsverdopplungs-Funktion des Gleichrichters ermöglicht wird.
- Im mittleren AC-Eingangsspannungs-Bereich 160 - 265V ist der Bereichsumschalter S_{R} geöffnet und der Gleichrichter arbeitet in konventioneller Weise.

Vorteilhaft führt der Dual-DC-Zwischenkreis zu einer Herabsetzung der Effektivwerte und Scheitelwerte der Ströme und der umlaufenden Energie. Im Ergebnis haben beide Betriebsweisen ähnliche Charakteristiken wie der konventionelle Ein-Schalter-Booster-Gleichrichter.

Der Bereichsumschalter S_{R} kann in mechanischer Form oder in elektro-mechanischer Form oder in Form eines Halbleiters oder in Form einer einfachen Drahtbrücke implementiert sein. Bei beiden vorstehend erwähnten AC-Eingangsspannungs-Bereichen (unterer und mittlerer Bereich) wird die DC-Spannung des Zwischenkreises auf 400V angesetzt. Der separate DC-DC-Umrichter wird gemäß der vorstehend unter den Fig. 2, 3a, 3b, 3c erläuterten Modulations-Strategie "Zwei-Pegel-Betriebsweise" betrieben.

Im oberen AC-Eingangsspannungs-Bereich 400 - 550V wird die DC-Spannung des Zwischenkreises auf 800V angesetzt. Um die gleiche DC-Verstärkungs-Charakteristik zu erzielen, wird der ZVS-Drei-Pegel-DC-DC-Resonanz-Umrichter mit der unter Fig. 4 erläuterten Modulations-Strategie "Drei-Pegel-Betriebsweise" betrieben. Es ist daran zu erinnern, dass die Kurvenformen im LLC-Serienresonanz-Schwingkreis und Transformator 8 trotz der angesetzten unterschiedlichen DC-Spannung des Zwischenkreises gleich sind. Dies bedeutet, dass sowohl die Effektivströme als auch die *Scheitelströme in den Leistungshalbleitern und den passiven Baukomponenten unverändert bleiben und deshalb unverändert die gleichen Anforderungen hinsichtlich Kühlung bestehen. Aus diesem Grund ist eine gute Optimierung über den gesamten weiten AC-Eingangsspannung-Bereich sichergestellt.

### Bezugszeichenliste

- 1, 2: AC-Eingangsanschlüsse
- 3, 4: DC-Zwischenkreisanschlüsse
- 5: DC-Zwischenkreis-Mittenanschluss
- 6, 7: DC-Ausgangsanschlüsse
- 8: Transformator
- A, B, C, D: Schaltungspunkt beim DC-DC-Umrichter
- Cᵢₙ: Eingangskondensator des DC-DC-Umrichters
- C_{Z}, C_{Z1}, C_{Z2}: Zwischenkreiskondensator
- Cₒᵤₜ: Ausgangskondensator des DC-DC-Umrichters
- Cᵣ: Resonanzkondensator des DC-DC-Umrichters
- Dᵣ₁, Dᵣ₂: Sekundärdioden des DC-DC-Umrichters
- D₁, D₂ , D₃, D₄: Dioden des Gleichrichters
- D_{b}, D_{b1} , D_{b2} , D_{b3}, D_{b4}: Ausgangsdioden des Gleichrichters
- I_{Lm}: Strom durch die Magnetisierungsinduktivität
- I_{Lr}: Strom durch die Resonanzinduktivität
- I_{S1}, I_{S1}: Strom durch den Primärschalter
- Lᵢₙ: Glättungsinduktivität des Gleichrichters
- Lₘ: Magnetisierungsinduktivität des Transformators des DC-DC-Umrichters
- Lᵣ: Resonanzinduktivität des DC-DC-Umrichters
- n: Übersetzungsverhältnis des Transformators des DC-DC-Umrichters
- S₁, S₂, S₃, S₄: Primärschalter des DC-DC-Umrichters inklusive Rückspeise-dioden
- S_{B}, S_{B1}, S_{B2},: Schalter des Gleichrichters inklusive Rückspeisedioden
- S_{R}: Bereichsumschalter des Gleichrichters
- t₀, t₁, t₂, t₃: Zeitpunkte
- V_{ab}: Spannung zwischen den Schaltungspunkten A, B
- V_{gs}: Ansteuersignale für die Primärschalter des DC-DC-Umrichters
- Vᵢₙ: Eingangsspannung des DC-DC-Umrichters
- Vₒn: transformierte Ausgangsspannung des DC-DC-Umrichters

## Patentansprüche

1. AC-DC-Zwischenkreis-Wandier mit sehr weitem AC-Eingangsspannungs-Bereich mit einem ZVS-Drei-Pegel-DC-DC-Resonanz-Umrichter, welcher vier in Serie zwischen zwei DC-Zwischenkreisanschlüssen (3, 4) angeordnete Primärschalter (S₁, S₂, S₃, S₄) - ein erster (S₁) und ein zweiter äußerer Primärschalter (S₄) sowie ein erster (S₂) und ein zweiter innerer Primärschalter (S₃) - aufweist,
a) wobei der gemeinsame Verbindungspunkt (A) zwischen den beiden inneren Primärschaltern (S₂, S₃) über einen LLC-Serienresonanz-Schwingkreis mit einer Resonanzinduktivität (Lᵣ), einer der Primärwicklung eines Transformators (8) parallel liegenden Magnetisierungsinduktivität (Lₘ) und einem Resonanzkondensator (Cᵣ) mit dem gemeinsamen Verbindungspunkt zwischen dem zweiten äußeren Primärschalter (S₄) und dem zweiten DC-Zwischenkreisanschluss (4) verbunden ist,
b) wobei der gemeinsame Verbindungspunkt (C) zwischen erstem äußeren und inneren Primärschalter (S₁, S₂) über einen Eingangskondensator (Cᵢₙ) mit dem gemeinsamen Verbindungspunkt (D) zwischen zweitem inneren und äußeren Primärschalter (S₃, S₄) verbunden ist,
c) wobei zwischen den beiden DC-Zwischenkreisanschlüssen (3, 4) zwei Zwischenkreiskondensatoren (C_{Z1}, C_{Z2}) in Serie geschaltet sind, deren gemeinsamer Verbindungspunkt einen DC-Zwischenkreis-Mittenanschluss (5) bildet,
d) wobei die DC-Zwischenkreisanschlüsse (3, 4) mit den Gleichanschlüssen eines Gleichrichters (D₁, D₂, D₃, D₄) verbunden sind, dessen AC-Eingangsanschlüsse (1, 2) mit der AC-Eingangsspannung beaufschlagt sind,
e) wobei ein Bereichsumschalter (Sᵣ) zwischen einem AC-Eingangsanschluss (2) und dem DC-Zwischenkreis-Mittenanschluss (5) angeordnet ist,
f) wobei der Bereichsumschalter (Sᵣ) in einem unteren AC-Eingangsspannung-Bereich geschlossen ist und der ZVS-Drei-Pegel-DC-DC-Resonanz-Umrichter gemäß einer Modulations-Strategie "Zwei-Pegel-Betriebsweise" betrieben wird, bei welcher jeweils einerseits der erste äußere Primärschalter (S₁) und der erste innere Primärschalter (S₂) gemeinsam und andererseits der zweite innere Primärschalter (S₃) und der zweite äußere Primärschalter (S₄) gemeinsam angesteuert werden, so dass der LLC-Serienresonanz-Schwingkreis jeweils mit der vollen zwischen den DC-Zwischenkreisanschlüssen (3, 4) anstehenden DC-Eingangsspannung beaufschlagt wird,
g) wobei der Bereichsumschalter (Sᵣ) in einem mittleren AC-Eingangsspannung-Bereich geöffnet ist und der ZVS-Drei-Pegel-DC-DC-Resonanz-Umrichter ebenfalls gemäß der Modulations-Strategie "Zwei-Pegel-Betriebsweise" betrieben wird,
h) wobei der Bereichsumschalter (Sᵣ) in einem oberen AC-Eingangsspannung-Bereich geöffnet ist und der ZVS-Drei-Pegel-DC-DC-Resonanz-Umrichter gemäß einer Modulations-Strategie "Drei-Pegel-Betriebsweise" betrieben wird, bei welcher der erste äußere Primärschalter (S₁) und der zweite innere Primärschalter (S₃) einerseits sowie der erste innere Primärschalter (S₂) und der zweite äußere Primärschalter (S₄) andererseits in einer komplementären Art und Weise betrieben werden, so dass der LLC-Serienresonanz-Schwingkreis lediglich mit der halben zwischen den DC-Zwischenkreisanschlüssen (3, 4) anstehenden DC-Eingangsspannung beaufschlagt wird.

2. AC-DC-Zwischenkreis-Wandier nach Anspruch 1, **dadurch gekennzeichnet, dass** die Resonanzinduktivität (Lᵣ) zumindest teilweise durch die Streuinduktivität des Transformators (8) gebildet wird.

3. AC-DC-Zwischenkreis-Wandler nach Anspruch 1 oder 2, **dadurch gekennzeichnet, dass** der Gleichrichter (D₁, D₂, D₃, D₄) als nicht steuerbarer Vollbrücken-Gleichrichter mit einer Glättungsinduktivität (Lᵢₙ) auf der AC-Seite ausgebildet ist (Fig. 5).

4. AC-DC-Zwischenkreis-Wandler nach Anspruch 1 oder 2, **dadurch gekennzeichnet, dass** der Gleichrichter (D₁, D₂, D₃, D₄) als nicht steuerbarer Vollbrücken-Gleichrichter mit einer aus zwei miteinander gekoppelten Komponenten bestehenden Glättungsinduktivität (Lᵢₙ) auf der DC-Seite ausgebildet ist (Fig. 6).

5. AC-DC-Zwischenkreis-Wandler nach Anspruch 1 oder 2, **dadurch gekennzeichnet, dass** der Gleichrichter als steuerbarer Drei-Pegel-Booster-Gleichrichter mit zwei am Ausgang eines Brückengleichrichters (D₁, D₂, D₃, D₄) liegenden, geteilten und miteinander gekoppelten Glättungsinduktivitäten (Lᵢₙ/2), zwei mit den DC-Zwischenkreisanschlüssen (3, 4) verbundenen Ausgangsdioden (D_{b3}, D_{b4}) und zwei mit den Glättungsinduktivitäten verbundenen, in Serie geschalteten Schaltern (S_{B1} , S_{B2}) ausgebildet ist (Fig. 10).

6. AC-DC-Zwischenkreis-Wandler nach Anspruch 1 oder 2, **dadurch gekennzeichnet, dass** der Gleichrichter als steuerbarer Ein-Phasen-Vienna-Booster-Gleichrichter mit AC-seitiger Glättungsinduktivität (Lᵢₙ), zwei Ausgangsdioden (D_{b3}, D_{b4}) und einem zwischen den Gleichanschlüssen eines Brückengleichrichters (D₁, D₂, D₃, D₄) geschalteten Schalter (S_{B}) ausgebildet ist (Fig. 11).

7. AC-DC-Zwischenkreis-Wandler nach Anspruch 1 oder 2, **dadurch gekennzeichnet, dass** der Gleichrichter als steuerbarer Zwei-Schalter-Drei-Pegel-Booster-Gleichrichter mit AC-seitiger Glättungsinduktivität (Lᵢₙ) und zwei Ausgangsdioden (D_{b3}, D_{b4}) ausgebildet ist ausgebildet ist, bei welchem zwei Dioden eines Brückengleichrichters (D₁, D₂, D₃, D₄) durch Schalter (S_{B1} ,S_{B2}) ersetzt sind (Fig. 12).
